# EUROPÄISCHE PATENTSCHRIFT

(11) **EP 3 293 480 B1**
(45) Veröffentlichungstag und Bekanntmachung des Hinweises auf die Patenterteilung: **06.03.2019**
(21) Anmeldenummer: 17187873.9
(22) Anmeldetag: 25.08.2017
(51) Int. Cl.: G01B 11/12

(54) **VERFAHREN UND VORRICHTUNG ZUR ABBILDUNG DER INNENKONTUR EINES ROHRES**
METHOD AND APPARATUS FOR IMAGING THE INNER CONTOUR OF A TUBE
PROCÉDÉ ET DISPOSITIF DE MISE EN IMAGE DE CONTOUR INTÉRIEUR D'UN TUBE

(30) Priorität: 01.09.2016 DE 102016216568
(43) Veröffentlichungstag der Anmeldung: 14.03.2018
(73) Patentinhaber: SCHOTT AG, 55122 Mainz (DE)
(72) Erfinder: WIEDENMANN, Hans, 95652 Waldsassen (DE); WITZMANN, André, 95679 Waldershof (DE)

(56) Entgegenhaltungen:
- WO-A1-2013/021137
- DE-A1- 19 510 257
- DE-A1-102009 015 627
- US-A1- 2013 308 131

## Beschreibung

Die Erfindung betrifft ein Verfahren und eine Vorrichtung zur Abbildung der Innenkontur eines Rohres.

Ein wichtiges Qualitätsmerkmal eines Rohres ist dessen Innendurchmessertoleranz. Beispielsweise müssen für Kapillaren und Röhren für technische Thermometer Innendurchmessertoleranzen im Bereich von z. B. ±0,02 mm eingehalten werden. Bei Präzisionsglasröhrchen, z. B. zur Verwendung als Probenträger für magnetische Kernresonanz-Untersuchungen, werden noch wesentlich engere Toleranzen im Mikrometerbereich verlangt. Auch im Bereich von Pharmaverpackungen aus Glas ist eine enge Toleranz einzuhalten, da diese einen unmittelbaren Einfluss auf die Dosiergenauigkeit des verpackten Medikaments hat.

Aus der DE 199 08 623 A1 ist ein Verfahren zur Herstellung von Präzisionsglasröhrchen auf der Grundlage eines kontinuierlichen Rohrziehverfahrens bekannt. Um das geforderte Endmaß und die geringen Toleranzen zu erreichen, wird sowohl der Außendurchmesser als auch der Innendurchmesser des gezogenen Glasrohres ständig, wenigstens an einem Messpunkt radial zur Ziehrichtung, gemessen. Die Messwerte werden mit den vorbestimmten Sollwerten des Präzisionsglasröhrchens verglichen. Zur Ermittlung der Messwerte wird ein Laser-Messverfahren angewendet.

In der DE 10 2009 015 627 A1 sind ein Verfahren und eine Vorrichtung zur Bestimmung von Innendurchmesser, Außendurchmesser und Wandstärke von transparenten rotationssymmetrischen Körpern offenbart. Zur Vermessung der Innenkontur wird dabei Licht einer Linienlichtquelle seitlich parallel zur Rotationssymmetrieachse des Körpers eingestrahlt und ebenfalls seitlich mit einer Empfangsoptik detektiert.

Ein Aufbau mit polarisationsverändernden Elementen ist aus DE19510257 Abb.3 bekannt.

Der Erfindung liegt demgegenüber die Aufgabe zugrunde, ein verbessertes Verfahren zu schaffen, welches die Messung des Innendurchmessers eines Rohres ermöglicht. Ferner liegt der Erfindung die Aufgabe zugrunde, eine entsprechende Vorrichtung zu schaffen.

Die Aufgabe wird erfindungsgemäß durch ein Verfahren mit den Merkmalen des Patentanspruches 1 sowie eine Vorrichtung mit den Merkmalen des Patentanspruches 6 gelöst. Bevorzugte Ausführungsformen der Erfindung sind in den abhängigen Patentansprüchen angegeben.

Unter dem Begriff Innenkontur ist erfindungsgemäß der Verlauf der Innenkante des Rohres an dessen Stirnseite zu verstehen, anhand dessen Toleranzabweichungen des Innendurchmessers bestimmt werden können. Die Längsrichtung des Rohres ist erfindungsgemäß als die Verbindungsrichtung zwischen dessen geöffneten Enden definiert. Im Falle von Rohren in Form von Hohlzylindern entspricht die Längsachse der Zylinderachse.

Bei dem erfindungsgemäßen Verfahren wird Licht einer ersten Polarisationsrichtung auf ein erstes Rohrende in dessen Längsrichtung eingestrahlt. Die Art der Polarisation sowie deren Richtung können dabei entweder aus der Verwendung eines geeigneten Polarisationsfilters resultieren oder, im Speziellen bei Verwendung von Lasern, eine inhärente Eigenschaft des verwendeten Leuchtmittels sein. Derjenige Teil des eingestrahlten Lichtes, der dabei auf die Stirnseite der Wandung des Rohres trifft, wird dort teilweise reflektiert und teilweise transmittiert.

Der reflektierte Anteil des Lichts trifft auf einen Polarisationsfilter, der eine Durchlass-Polarisationsrichtung aufweist, die orthogonal zu der Polarisationsrichtung des eingestrahlten Lichtes steht. Dieser Polarisationsfilter lässt also das an der Stirnseite des Rohres reflektierte Licht nicht durch.

Der an der Stirnseite des Rohres transmittierte Anteil des Lichts durchläuft die Rohrwandung in Längsrichtung und wird dabei aufgrund von Absorptions- und/oder Streuprozessen gedämpft. Derjenige Anteil des eingestrahlten Lichts, der auf den Innenquerschnitt des Rohres trifft, durchläuft dagegen das Rohr in Längsrichtung im Wesentlichen ungedämpft.

Am zweiten Ende des Rohres tritt das Licht aus der Rohrwandung und aus dem Innenquerschnitt des Rohres aus und wird dahinter wieder zurückreflektiert. Dabei weist die Polarisationsrichtung des zurücklaufenden Lichts eine zweite Polarisationsrichtung auf, die orthogonal zu der ursprünglichen Polarisationsrichtung ist. Der durch die Rohrwandung zurücklaufende Anteil des Lichts wird dabei weiter gedämpft, während das durch den Innenquerschnitt des Rohres zurücklaufende Licht wieder im Wesentlichen ungedämpft aus dem ersten Ende des Rohres austritt. Dort trifft es, wie zuvor schon das an der Stirnseite reflektierte Licht, auf den Polarisationsfilter, von dem es aufgrund der vorherigen Änderung der Polarisationsrichtung durchgelassen wird.

Das von dem Polarisationsfilter durchgelassene Licht entspricht also im Wesentlichen demjenigen Anteil des eingestrahlten Lichts, welches durch den Innenquerschnitt des Rohres hindurchgelaufen ist. Dieser Lichtanteil bildet somit die Innenkontur des Rohres ab und kann von einem Empfänger aufgenommen werden. Mit Hilfe der aufgenommenen Innenkontur kann dann überprüft werden, ob der Innenquerschnitt des Rohres innerhalb eines vorgegebenen Toleranzbereichs liegt.

Dabei ist von besonderem Vorteil, dass ein großer Kontrast der Abbildung erreichbar ist. Dies ist dadurch bedingt, dass derjenige Anteil des eingestrahlten Lichts, der auf die Stirnfläche des Rohres fällt, nicht oder nur zu einem sehr geringen Anteil durch den zweiten Polarisationsfilter hindurchtreten kann. Die Ursache hierfür ist, dass einerseits der an der Stirnfläche reflektierte Anteil des Lichts keine Drehung seiner Polarisationsrichtung erfährt und somit nicht von dem Polarisationsfilter durchgelassen wird, und andererseits der an der Stirnfläche transmittierte Anteil des eingestrahlten Lichts durch die Wandung des Rohres in Hin- und in Rückrichtung stark gedämpft wird.

Von weiterem besonderem Vorteil ist ferner, dass die Qualität der Abbildung der Innenkontur im Wesentlichen unabhängig von der Qualität der Rohrquerschnittsfläche ist. Insbesondere ist eine präzise Abbildung der Innenkontur trotz schlechter Planlaufverhältnisse der Rohrquerschnittsfläche, z. B. aufgrund von Bruchkanten, Ausmuschelungen, Sägerauheit, etc., erreichbar.

Darüber hinaus verhält sich das Rohr wie ein Hohllichtleiter. Durch die Richtungsumkehr des Lichtes aufgrund der Reflexion bewegt sich das Licht nach der Reflexion auf nahezu dem gleichen Weg wieder zu dem gegenüberliegenden beleuchteten Rohrende zurück. Aufgrund dessen wird die zu untersuchende Querschnittsfläche im Vergleich mit einfacher Durchstrahlung sehr homogen ausgeleuchtet. Insbesondere wird dadurch eine eventuelle Krümmung des Rohres bzw. eine nicht koaxiale Beleuchtung kompensiert.

Von besonderem weiterem Vorteil ist, dass die vorliegende Erfindung sowohl zur Abbildung der Innenkontur von Rohren aus transparenten als auch aus opakem Material geeignet ist. Dadurch ist es auch besonders zur Abbildung der Innenkontur von Rohren aus Glas geeignet, unabhängig davon, ob das Glas farblos, eingefärbt, transparent oder lichtstreuend ist oder ob es auf seiner Außen- oder Innenseite Beschichtungen aufweist. Weitere Materialien, die für die vorliegende Erfindung geeignet sind, sind beispielsweise Kunststoff oder Metall.

Das erfindungsgemäße Verfahren ist besonders für die Vermessung von Rohren mit einer Länge von 0,5 m bis 3 m, bevorzugt 1 m bis 2,5 m, besonders bevorzugt 1,4 m bis 2 m geeignet. Die Innendurchmesser solcher Rohre liegen bevorzugt zwischen 2 mm und 100 mm, besonders bevorzugt zwischen 5 mm und 50 mm. Das Verhältnis von Rohrlänge zu Innendurchmesser kann dabei zwischen 10 und 1000, bevorzugt zwischen 20 und 500, besonders bevorzugt zwischen 30 und 300 liegen.

Eine erfindungsgemäße Vorrichtung zur Abbildung der Innenkontur eines Rohres ist in Anspruch 6 definiert.

Nach einer bevorzugten Ausführungsform der Erfindung wird eine schmalbandige Lichtquelle, insbesondere eine monochromatische Lichtquelle, verwendet. Bei derartigen Lichtquellen kann es sich bevorzugt um Leuchtdioden (LEDs) oder Laser handeln. Es können aber auch breitbandige Lichtquellen wie Glühlampen oder Gasentladungsröhren mit einem entsprechenden Schmalbandfilter verwendet werden. Vorzugsweise wird eine telezentrische Lichtquelle verwendet, die im Wesentlichen parallele Lichtstrahlen abgibt.

Nach einer weiteren bevorzugten Ausführungsform der Erfindung wird, insbesondere bei transparentem Material, Licht einer Wellenlänge gewählt, bei der die Extinktion des Rohrmaterials maximal ist. Dies hat den Vorteil einer besonders starken Dämpfung des durch die Rohrwandung laufenden Anteils des Lichts. Dies ist vor allem für kurze Rohre vorteilhaft, da hier weniger optische Weglänge für die Dämpfung zur Verfügung steht.

Nach einer weiteren bevorzugten Ausführungsform der Erfindung erfolgt die Wahl der Wellenlänge des eingestrahlten Lichts, insbesondere bei opakem Material, vorzugsweise so, dass die Reflektivität des Materials bei der gewählten Wellenlänge ein Maximum hat, da so der Anteil des an der Stirnfläche des Rohres transmittierten Lichts minimiert wird.

Nach einer weiteren bevorzugten Ausführungsform der Erfindung handelt es sich bei der Art der Polarisation des eingestrahlten Lichtes um eine lineare Polarisation. Die Polarisationsrichtung des zurücklaufenden Lichts ist dabei um +/- 90° gedreht und somit orthogonal zu der Polarisationsrichtung des eingestrahlten Lichts. Alternativ kann es sich bei der Art der Polarisation auch um eine zirkulare Polarisation handeln. In diesem Fall ist beispielsweise das eingestrahlte Licht links-zirkular polarisiert und das zurücklaufende Licht rechts-zirkular polarisiert oder umgekehrt. Auch hier ist also die Polarisationsrichtung des durch das Rohr zurücklaufenden Lichts orthogonal zu der ursprünglichen Polarisationsrichtung.

Nach einer weiteren bevorzugten Ausführungsform der Erfindung erfolgt die Einstrahlung des Lichts stroboskopisch, um beispielsweise die Innenkontur von auf einer Fördervorrichtung vorbeilaufenden Rohren abzubilden. Zur Erzeugung von stroboskopischem Licht, weist die Lichtquelle bevorzugt eine rotierende Sektorblende, eine elektronische Ansteuerung oder eine Güteschaltung auf, mit der die Intensität des eingestrahlten Lichtes entsprechend moduliert werden kann. Rotierende Sektorblenden, auch Chopper genannt, sind besonders vielseitig und können mit jeder der genannten Leuchtmittel eingesetzt werden. Eine elektronische Ansteuerung ist im speziellen für die Modulation von Leucht- oder Laserdioden geeignet. Eine Güteschaltung ist in der Regel nur bei Verwendung von Lasern möglich.

Beispielsweise wird jedes Mal, wenn ein Rohr die Messeinrichtung passiert, ein kurzer Lichtimpuls einer Länge von z. B. einer tausendstel Sekunde für die Aufnahme der Innenkontur des vorbeilaufenden Rohres abgegeben. Die zeitliche Länge des Lichtpulses wird dabei in Abhängigkeit von der Geschwindigkeit des Förderbandes, der gewünschten Messgenauigkeit, der Intensität des Lichtpulses sowie gegebenenfalls der Empfindlichkeit eines Empfängers gewählt.

Nach einer weiteren bevorzugten Ausführungsform der Erfindung wird kollimiertes Licht verwendet. Dies ist besonders für lange Rohre vorteilhaft, da hierdurch eine Reduzierung der an einem Empfänger ankommenden Intensität des Lichts durch eine Vergrößerung der Querschnittsfläche des Lichtstrahls vermieden wird.

Gemäß der Erfindung durchläuft das eingestrahlte Licht nach dem Austritt aus dem hinteren Ende des Rohres sowohl vor als auch nach der Reflexion ein optisches Element, so dass das Licht nach dem zweiten Durchlaufen des optischen Elementes eine Polarisationsrichtung aufweist, die orthogonal zur ursprünglichen Polarisationsrichtung ist. Im Falle von linear polarisiertem Licht, wird also das reflektierte Licht nach zweimaligem Durchtritt durch das optische Element um 90° in seiner Polarisationsrichtung gedreht. Im Falle von zirkular polarisiertem Licht wird entsprechend beispielsweise linksdrehendes Licht in rechtsdrehendes Licht umgewandelt oder umgekehrt. Bevorzugt wird eine Lambda/4-Platte als ein solches optisches Element verwendet. Der Arbeitsbereich der Lambda/4-Platte ist dabei vorzugsweise auf das Frequenzband des verwendeten Lichts abgestimmt.

Nach einer weiteren bevorzugten Ausführungsform der Erfindung wird zur Reflexion des Lichts ein Retroreflektor verwendet, der das Licht unter Beibehaltung seiner Polarisationsrichtung reflektiert. Ein solcher Retroreflektor, der vorzugsweise das reflektierte Licht nur schwach streut, führt dazu, dass kollimiert eingestrahltes Licht nach der Reflexion schwach divergierend ist. Dadurch werden in vorteilhafter Weise z. B. durch eine Krümmung des Rohres bedingte Totzonen im Wesentlichen homogen beleuchtet. Ein weiterer Vorteil liegt in der Möglichkeit durch den Retroreflektor große Beleuchtungsaperturen realisieren zu können.

Nach einer weiteren bevorzugten Ausführungsform der Erfindung wird anstelle eines Retroreflektors ein Spiegel eingesetzt. Dies kann insbesondere für Anwendungen bei hohen Temperaturen vorteilhaft sein.

Nach einer weiteren bevorzugten Ausführungsform der Erfindung werden sowohl das an der Stirnseite der Wandung des Rohres reflektierte als auch das durch das Rohr zurücklaufende Licht nach dem Austritt aus dem ersten Ende des Rohres durch einen nicht polarisierenden Strahlteiler in Richtung des Polarisationsfilters umgelenkt. Der Arbeitsbereich des Polarisationsfilters ist dabei vorzugsweise auf das Frequenzband des verwendeten Lichts abgestimmt. Bevorzugt handelt es sich bei diesem Strahlteiler um eine nicht polarisierende Strahlteilerplatte, besonders bevorzugt um einen nicht polarisierenden Strahlteilerwürfel.

Nach einer weiteren bevorzugten Ausführungsform der Erfindung wird anstelle eines nicht polarisierenden Strahlteilers und eines Polarisationsfilters ein polarisierender Strahlteiler verwendet. Hierdurch wird in vorteilhafter Weise die Gesamtzahl an optischen Elementen der Vorrichtung reduziert. Diese Ausführungsform ist dabei zusätzlich energetisch günstiger, da die insgesamt auftretenden Lichtverluste geringer sind.

Gemäß der Erfindung wird das zurücklaufende Licht nach dem Durchgang durch den Polarisationsfilter mit einem Empfänger zur Aufnahme des zurücklaufenden Lichtes aufgenommen. Vorzugsweise handelt es sich bei diesem Empfänger um einen telezentrischen Empfänger, beispielsweise eine Kamera mit telezentrischem Objektiv.

Nach einer weiteren bevorzugten Ausführungsform der Erfindung wird vor dem Empfänger ein Schmalbandfilter zur Ausfilterung von Fremdlicht verwendet, dessen Durchlassbereich vorzugsweise auf das Spektrum des zurücklaufenden Lichts angepasst ist. Hierdurch lässt sich das Signal-zu-Rausch-Verhältnis der im Empfänger detektierten Abbildung weiter verbessern.

Nach einer weiteren bevorzugten Ausführungsform der Erfindung wird anhand der Abbildung geprüft, ob die Innenkontur innerhalb eines Toleranzbereichs liegt, wobei die Abbildung mit einer vordefinierten Kontur verglichen wird. Hierfür verfügt die Vorrichtung über eine Einheit zur Auswertung, ob die abgebildete Innenkontur innerhalb dieses Toleranzbereichs liegt, die vorzugsweise an den Empfänger angeschlossen ist.

Ein weiterer Vorteil der Erfindung ist die Möglichkeit der unabhängigen Justage der Beleuchtung und des Empfängers. Ferner ermöglicht die vorliegende Erfindung schnelle Messungen bei hoher Präzision.

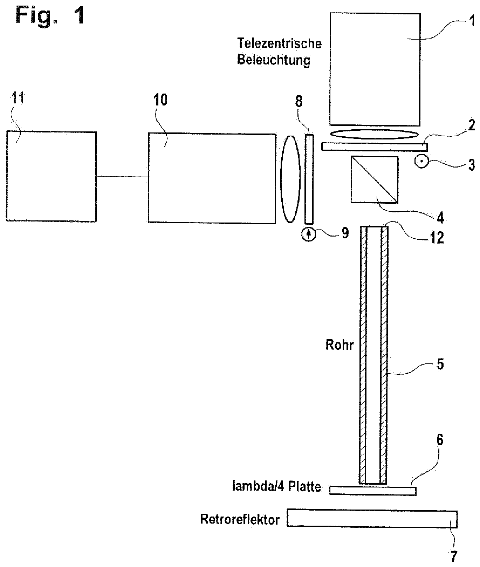

Im Weiteren wird anhand einer bevorzugten Ausführungsform die Funktionsweise der Erfindung mit Bezugnahme auf die Zeichnung näher erläutert. Die Figur 1 zeigt eine Prinzipdarstellung einer Ausführungsform einer erfindungsgemäßen Vorrichtung.

Die Vorrichtung der Figur 1 hat eine telezentrische Lichtquelle (1). Vor der telezentrischen Lichtquelle (1) befindet sich ein Polarisationsfilter (2) zur linearen Polarisation des durch den Polarisationsfilter (2) hindurchtretenden Lichts der telezentrischen Lichtquelle (1) in der Polarisationsrichtung (3) senkrecht zur Zeichenebene.

Hinter dem Polarisationsfilter (2) befindet sich ein nicht polarisierender Strahlteiler 4, der einen Anteil des einfallenden Lichts in Richtung auf das Rohr (5) durchlässt. Hinter dem Rohr befindet sich eine Lambda/4-Platte (6) mit einer Orientierung der Hauptachsen in einem Winkel von 45° zur Polarisationsebene des Lichtes. Danach folgt ein Retroreflektor 7.

Derjenige Anteil des von dem Retroreflektor (7) reflektierten Lichts, welches den Strahlteiler (4) erreicht, wird von dem Strahlteiler (4) auf einen Polarisationsfilter (8) gerichtet. Der Polarisationsfilter (8) hat eine Durchlass-Polarisationsrichtung 9, die senkrecht auf der Polarisationsrichtung (3) des Polarisationsfilters (2) steht.

Hinter dem Polarisationsfilter (8) ist ein Empfänger (10) angeordnet, beispielsweise eine Kamera mit telezentrischer Optik. Der Empfänger (10) liefert eine Abbildung der Innenkontur des Rohres 5, die mit Hilfe einer Auswertungseinheit (11) z. B. auf die Einhaltung der geforderten Toleranzen hin überprüft werden kann. Hierbei kann es sich z. B. um Karpulen handeln, die auf einem Querband an einer erfindungsgemäßen Messvorrichtung vorbeilaufen.

Beim Betrieb der Vorrichtung der Figur 1 wird zunächst das Rohr (5) in eine Messposition zwischen dem Strahlteiler (4) und der Lambda/4-Platte (6) gebracht. Die telezentrische Lichtquelle (1) gibt kollimiertes Licht ab, welches von dem Polarisationsfilter (2) in der Polarisationsrichtung (3) polarisiert wird. Vorzugsweise ist die Wellenlänge des kollimierten Lichts so gewählt, dass die Dämpfung des Lichts in dem Material der Wandung des Rohres (5) besonders groß ist. Wenn das Rohr z.B. aus Klarglas besteht, wird beispielsweise eine Wellenlänge im Infrarotbereich, bevorzugt eine Wellenlänge größer als 1,5 µm, gewählt. Je nach Rohrmaterial kann beispielsweise auch die Verwendung von UV- oder sichtbarem Licht vorteilhaft sein.

Ein Teil des kollimierten und linear polarisierten Lichts erreicht über den Strahlteiler (4) das Rohr 5. Derjenige Anteil des Lichts, der auf die Stirnfläche (12) der Wandung des Rohres (5) trifft, wird teilweise an der Stirnfläche (12) reflektiert und teilweise transmittiert. Der von der Stirnfläche des Rohres (5) reflektierte Anteil des Lichts gelangt über den Strahlteiler (4) zu dem Polarisationsfilter 8. Da die Durchlass-Polarisationsrichtung (9) des Polarisationsfilters (8) senkrecht auf der Polarisationsrichtung (3) des Polarisationsfilters (2) steht, wird dieser Anteil des Lichts von dem Polarisationsfilter (8) ausgefiltert.

Der an der Stirnfläche (12) der Wandung des Rohres transmittierte Anteil des Lichts durchläuft das Rohr (5) in Längsrichtung innerhalb der Wandung und wird dabei aufgrund von Streuung und Extinktion gedämpft. Derjenige Anteil des transmittierten Lichts, der das gegenüberliegende Ende des Rohres (5) erreicht, passiert die Lambda/4-Platte (6) und wird dabei zirkular polarisiert. Danach wird dieser Anteil des Lichts an dem Retroreflektor (7) reflektiert und durchtritt erneut die Lambda/4-Platte 6. Dadurch wird das Licht wieder linear polarisiert, wobei die resultierende Polarisationsrichtung um insgesamt 90° gegenüber der ursprünglichen Polarisationsrichtung gedreht ist und somit der Durchlass-Polarisationsrichtung (9) entspricht.

Dieser Anteil des Lichts durchläuft dann die Wandung des Rohres (5) in umgekehrter Richtung und wird in der Rücklaufrichtung weiter gedämpft. Aufgrund der langen optischen Weglänge durch das Rohr (5) in Hin- und Rückrichtung wird dieser Anteil des Lichts so stark gedämpft, dass kein oder fast kein Anteil dieses Lichts über den Strahlteiler (4) zu dem Polarisationsfilter (8) gelangen kann. Dies trifft insbesondere dann zu, wenn die Wellenlänge der telezentrischen Lichtquelle (1) so gewählt worden ist, dass möglichst große Extinktion auftritt.

Derjenige Anteil des kollimierten Lichts, welcher von dem Strahlteiler (4) auf den Innenquerschnitt des Rohres (5) fällt, durchläuft das Rohr (5) im Wesentlichen ungedämpft und wird danach von der Lambda/4-Platte (6) zirkular polarisiert. Danach erfolgt eine Reflexion an dem Retroreflektor (7) unter Beibehaltung der Polarisationsrichtung. Nach der Retroreflexion wird dieser Anteil des Lichts beim erneuten Durchtritt durch die Lambda/4-Platte (6) wieder linear polarisiert; aufgrund des zweimaligen Durchtritts durch die Lambda/4-Platte (6) wird das Licht um insgesamt 90° in seiner Polarisationsrichtung auf die Durchlass-Polarisationsrichtung (9) gedreht.

Das Licht läuft dann durch den Innenquerschnitt des Rohres (5) im Wesentlichen ungedämpft wieder zu dem Strahlteiler (4) zurück, der es auf den Polarisationsfilter (8) richtet. Da die Polarisationsrichtung in die Durchlass-Polarisationsrichtung gedreht worden ist, passiert dieser Anteil des Lichts den Polarisationsfilter (8) und gelangt zu dem Empfänger 10. Dort resultiert eine kontrastreiche und präzise Abbildung der Innenkontur des Rohres 5. Diese Abbildung wird an die Auswertungseinheit (11) übertragen, mit der beispielsweise geprüft wird, ob der Innenquerschnitt des Rohres (5) innerhalb der erlaubten Toleranzen liegt.

Von besonderem Vorteil bei der Verwendung eines Retroreflektors (7) ist, dass selbst dann eine scharfe Abbildung der Innenkontur erhalten werden kann, wenn das Rohr (5) gekrümmt ist. Aufgrund der schwachen Divergenz des eingestrahlten kollimierten Lichts nach der Retroreflexion werden nämlich auch durch die Krümmung des Rohres (5) bedingte Totzonen im Wesentlichen homogen ausgeleuchtet.

Ferner ist es auch möglich anstelle der Polarisationsfilter (2) und (8) und des nicht polarisierenden Strahlteilers einen polarisierenden Strahlteiler einzusetzen.

Das Rohr (5) kann sich beispielsweise auf einem mit gleich bleibender Geschwindigkeit bewegten Förderband befinden. Sobald sich das Rohr (5) in der in der Figur 1 gezeigten Position zwischen dem Strahlteiler (4) und der Lambda/4-Platte (6) befindet, wird die telezentrische Lichtquelle (1) ausgelöst, die einen kurzen Lichtimpuls zur Aufnahme der Innenkontur des Rohres (5) abgibt. Sobald das nächste Rohr auf dem Förderband diese Messposition passiert, wird erneut ein Lichtpuls für die nächste Messung abgegeben. Dieser Vorgang wird dann für alle Rohre in gleicher Weise wiederholt. Alternativ dazu kann die Beleuchtung auch kontinuierlich erfolgen und der Empfänger mit einem Verschluss vorgesehen sein, der nur dann öffnet, wenn ein Rohr die Messposition passiert.

**Bezugszeichenliste**

| | |
|---|---|
| telezentrische Lichtquelle | 1 |
| Polarisationsfilter | 2 |
| Polarisationsrichtung | 3 |
| Strahlteiler | 4 |
| Rohr | 5 |
| Lambda/4-Platte | 6 |
| Retroreflektor | 7 |
| Polarisationsfilter | 8 |
| Durchlass-Polarisationsrichtung | 9 |
| Empfänger | 10 |
| Auswertungseinheit | 11 |
| Stirnfläche | 12 |

## Patentansprüche

1. Verfahren zur Abbildung der Innenkontur eines Rohres (5) mit folgenden Schritten:
- Bereitstellen eines Rohres (5),
- Einstrahlung von Licht einer ersten Polarisationsrichtung (3) auf ein erstes Ende des bereitgestellten Rohres in Längsrichtung des Rohres, wobei der in Längsrichtung durch die Rohrwandung durchlaufende Anteil des eingestrahlten Lichts aufgrund von Absorptions- und/oder Streuprozessen gedämpft wird,
und wobei derjenige Anteil des eingestrahlten Lichts, der auf den Innenquerschnitt des Rohres trifft, das Rohr in Längsrichtung im Wesentlichen ungedämpft durchläuft,
- Reflexion des eingestrahlten Lichtes hinter einem zweiten Rohrende, wobei das eingestrahlte Licht vor und nach der Reflexion hinter einem zweiten Rohrende durch ein optisches Element zur Drehung der Polarisationsrichtung läuft, so dass es nach dem zweiten Durchlaufen des optischen Elements eine zweite Polarisationsrichtung aufweist,
- wobei das aufgrund der Reflexion durch das Rohr zurücklaufende Licht die zweite Polarisationsrichtung (9) aufweist, die orthogonal zur ersten Polarisationsrichtung (3) ist,
- Filterung des zurücklaufenden Lichts mit einem Polarisationsfilter (8) zum Durchlass nur des zurücklaufenden Lichts mit der zweiten Polarisationsrichtung (9),
- wobei das zurücklaufende Licht nach dem Durchlaufen des Polarisationsfilters (8) mit einem Empfänger (10) zur Aufnahme des zurücklaufenden Lichts aufgenommen wird.

2. Verfahren nach Anspruch 1, wobei das Rohr aus einem transparenten oder einem opaken Material, bevorzugt aus Glas besteht.

3. Verfahren nach Anspruch 1 oder 2, wobei das Rohr eine Länge von 0,5 m bis 3 m, bevorzugt 1 m bis 2,5 m, besonders bevorzugt 1,4 m bis 2 m , einen Innendurchmesser von 2 mm bis 100 mm, bevorzugt zwischen 5 mm und 50 mm aufweist und das Verhältnis von Rohrlänge zu Innendurchmesser zwischen 10 und 1000, bevorzugt zwischen 20 und 500, besonders bevorzugt zwischen 30 und 300 liegt.

4. Verfahren nach einem der vorhergehenden Ansprüche 1 bis 3, wobei das Licht schmalbandig oder monochromatisch ist und/oder eine Wellenlänge aufweist, bei der die Extinktion oder die Reflexion des Rohrmaterials ein Maximum hat und/oder linear oder zirkular polarisiert ist und/oder stroboskopisch eingestrahlt wird und/oder kollimiert ist.

5. Verfahren nach einem der vorhergehenden Ansprüche 1 bis 4, wobei anhand der Abbildung geprüft wird, ob die Innenkontur innerhalb eines Toleranzbereichs liegt.

6. Vorrichtung zur Abbildung der Innenkontur eines Rohres gemäß des Verfahrens der vorhergehenden Ansprüche 1 bis 5 zumindest mit:
- Mitteln zur Bereitstellung eines Rohres,
- Mitteln zur Einstrahlung von Licht einer ersten Polarisationsrichtung (3) auf ein erstes Rohrende des bereitgestellten Rohres in Längsrichtung des Rohres, wobei der in Längsrichtung durch die Rohrwandung durchlaufende Anteil des eingestrahlten Lichts aufgrund von Absorptions- und/oder Streuprozessen gedämpft wird,
und wobei derjenige Anteil des eingestrahlten Lichts, der auf den Innenquerschnitt des Rohres trifft, das Rohr in Längsrichtung im Wesentlichen ungedämpft durchläuft,
- Mitteln (6, 7) zur Reflexion des eingestrahlten Lichts hinter einem zweiten Rohrende, wobei die Mittel (6,7) zur Reflexion des Lichts sowohl Mittel (6) zur Drehung der Polarisationsrichtung des Lichts als auch Mittel (7) zur Reflexion des Lichtes unter Beibehaltung von dessen Polarisationsrichtung aufweisen, wobei die Mittel (6) zur Drehung der Polarisationsrichtung zwischen dem zweiten Rohrende und den Mitteln (7) zur Reflexion des Lichts angeordnet sind, so dass das durch das Rohr aufgrund der Reflexion zurücklaufende Licht eine zweite Polarisationsrichtung (9) aufweist, die orthogonal zur ersten Polarisationsrichtung (3) ist,
- Mitteln (8) zum Durchlass nur des zurücklaufenden Lichts mit der zweiten Polarisationsrichtung (9) und
- einem Empfänger (10) zur Aufnahme des von den Mitteln (8) zum Durchlass durchgelassenen, zurücklaufenden Lichts.

7. Vorrichtung nach dem vorhergehenden Anspruch 6, wobei die Mittel zur Einstrahlung von Licht eine telezentrische Lichtquelle (1) aufweisen.

8. Vorrichtung nach einem der vorhergehenden Ansprüche 6 oder 7, wobei die Mittel zur Einstrahlung von Licht einer ersten Polarisationsrichtung (3) zumindest ein Leuchtmittel aus der Gruppe der Glühlampen, Gasentladungsröhren, Leuchtdioden oder Laser aufweist und vorzugsweise ein Mittel zur Modulation der Intensität aus der Gruppe rotierende Sektorblende, elektronische Ansteuerung oder Güteschaltung sowie optional einen Polarisationsfilter der ersten Polarisationsrichtung umfasst.

9. Vorrichtung nach einem der vorhergehenden Ansprüche 6 bis 8, wobei sowohl die Mittel zur Einstrahlung von Licht als auch die Mittel (8) zum Durchlass des zurücklaufenden Lichts jeweils einen Polarisationsfilter aufweisen, wobei der Polarisationsfilter der Mittel zur Einstrahlung gemäß der ersten Polarisationsrichtung (3) und der Polarisationsfilter der Mittel (8) zum Durchlass des zurücklaufenden Lichts gemäß der zweiten (9) Polarisationsrichtung ausgerichtet sind und entweder beide Polarisationsfilter als lineare oder beide Polarisationsfilter als zirkulare Polarisationsfilter ausgebildet sind.

10. Vorrichtung nach einem der vorherstehenden Ansprüche 6 bis 9, mit einem Strahlteiler (4) vor dem ersten Rohrende, der so ausgerichtet ist, dass er das zurücklaufende Licht auf die Mittel (8) zum Durchlass des zurücklaufenden Lichts lenkt.

11. Vorrichtung nach einem der vorhergehenden Ansprüche 6 bis 10, wobei die Mittel (6) zur Drehung der Polarisationsrichtung des Lichts eine Lambda/4-Platte aufweisen.

12. Vorrichtung nach einem der vorhergehenden Ansprüche 6 bis 11, wobei es sich bei den Mitteln (7) zur Reflexion um einen Retroreflektor oder einen Spiegel handelt.

13. Vorrichtung nach einem der vorhergehenden Ansprüche 6 bis 12, mit einem optischen Schmalbandfilter hinter den Mitteln (8) zum Durchlass des zurücklaufenden Lichts, dessen Durchlassbereich vorzugsweise auf das Spektrum des zurücklaufenden Lichts angepasst ist.

14. Vorrichtung nach einem der vorhergehenden Ansprüche 6 bis 13, wobei es sich bei dem Empfänger (10) um einen telezentrischen Empfänger handelt.

15. Vorrichtung nach einem der vorhergehenden Ansprüche 6 bis 14, mit einer Einheit (11) zur Auswertung, ob die abgebildete Innenkontur innerhalb eines Toleranzbereichs liegt.

## Claims

1. Method for imaging the inner contour of a tube (5) having the following steps:
- providing a tube (5),
- radiating light having a first polarization direction (3) onto a first end of the provided tube in the longitudinal direction of the tube, wherein the component of the radiated light that has travelled through the tube wall in the longitudinal direction is attenuated owing to absorption and/or scattering processes, and wherein the component of the radiated light that is incident on the internal cross section of the tube travels through the tube in the longitudinal direction in substantially unattenuated fashion,
- reflecting the radiated light downstream of a second tube end,
wherein the radiated light passes through an optical element for rotating the polarization direction before and after the reflection, with the result that the light after its second passage through the optical element has the second polarization direction,
- wherein the light that is returning through the tube due to the reflection has the second polarization direction (9) that is orthogonal with respect to the first polarization direction (3),
- filtering the returning light with a polarization filter (8) to transmit only the returning light having the second polarization direction (9),
- wherein the returning light is recorded after its passage through the polarization filter (8) using a receiver (10) for receiving the returning light.

2. Method according to Claim 1, wherein the tube is made of a transparent or opaque material, preferably of glass.

3. Method according to Claim 1 or 2, wherein the tube has a length of 0.5 m to 3 m, preferably 1 m to 2.5 m, with particular preference 1.4 m to 2 m, an inside diameter of 2 mm to 100 mm, preferably between 5 mm and 50 mm, and the ratio of tube length to inside diameter is between 10 and 1000, preferably between 20 and 500, with particular preference between 30 and 300.

4. Method according to one of the preceding Claims 1 to 3, wherein the light is narrowband light or monochromatic light and/or has a wavelength at which the extinction or the reflection of the tube material is at a maximum and/or is linearly or circularly polarized and/or is radiated stroboscopically and/or collimated.

5. Method according to one of the preceding Claims 1 to 4, wherein a check is carried out on the basis of the image as to whether the inner contour lies within a tolerance range.

6. Apparatus for imaging the inner contour of a tube according to the method of the preceding Claims 1 to 5 having at least:
- means for providing a tube,
- means for radiating light having a first polarization direction (3) onto a first tube end of the provided tube in the longitudinal direction of the tube, wherein the component of light of the radiated light that has travelled through the tube wall in the longitudinal direction is attenuated owing to absorption and/or scattering processes, and wherein the component of the radiated light that is incident on the internal cross section of the tube travels through the tube in the longitudinal direction in substantially unattenuated fashion,
- means (6, 7) for reflecting the radiated light downstream of a second tube end, wherein the means (6, 7) for reflecting the light have both means (6) for rotating the polarization direction of the light and means (7) for reflecting the light while maintaining the polarization direction thereof, wherein the means (6) for rotating the polarization direction are arranged between the second tube end and the means (7) for reflecting the light, with the result that the light returning through the tube due to the reflection has a second polarization direction (9) that is orthogonal with respect to the first polarization direction (3),
- means (8) for transmitting only the returning light having the second polarization direction (9), and
- a receiver (10) for receiving the returning light that has been transmitted by the means (8) for transmission.

7. Apparatus according to the preceding Claim 6, wherein the means for radiating light have a telecentric light source (1).

8. Apparatus according to one of the preceding Claims 6 or 7, wherein the means for radiating light having a first polarization direction (3) have at least one light-emitting means from the group of incandescent lights, gas discharge tubes, light-emitting diodes or lasers, and preferably comprises a means for modulating the intensity from the group rotating sector diaphragm, electronic drive or Q switch, and optionally a polarization filter of the first polarization direction.

9. Apparatus according to one of the preceding Claims 6 to 8, wherein both the means for radiating light and the means (8) for transmitting the returning light each have a polarization filter, wherein the polarization filter of the means for radiating is aligned in accordance with the first polarization direction (3), and the polarization filter of the means (8) for transmitting the returning light is aligned in accordance with the second polarization direction (9), and either both polarization filters are in the form of linear polarization filters or both polarization filters are in the form of circular polarization filters.

10. Apparatus according to one of the preceding Claims 6 to 9, having a beam splitter (4) upstream of the first tube end, which is aligned such that it directs the returning light onto the means (8) for transmitting the returning light.

11. Apparatus according to one of the preceding Claims 6 to 10, wherein the means (6) for rotating the polarization direction of the light have a quarter-wave plate.

12. Apparatus according to one of the preceding Claims 6 to 11, wherein the means (7) for reflecting are a retroreflector or a mirror.

13. Apparatus according to one of the preceding Claims 6 to 12, having an optical narrowband filter downstream of the means (8) for transmitting the returning light, the transmission range of which is preferably matched to the spectrum of the returning light.

14. Apparatus according to one of the preceding Claims 6 to 13, wherein the receiver (10) is a telecentric receiver.

15. Apparatus according to one of the preceding Claims 6 to 14, having a unit (11) for evaluating whether the imaged inner contour lies within a tolerance range.

## Revendications

1. Procédé pour représenter le contour intérieur d'un tube (5), comprenant les étapes suivantes :
- fourniture d'un tube (5),
- irradiation de lumière ayant un premier sens de polarisation (3) sur une première extrémité du tube fourni dans le sens longitudinal du tube, la part de la lumière irradiée qui traverse la paroi du tube dans la direction longitudinale étant atténuée en raison de processus d'absorption et/ou de diffusion, et la part de la lumière irradiée qui est incidente sur la section transversale intérieure du tube traversant le tube dans la direction longitudinale sensiblement sans être atténuée,
- réflexion de la lumière irradiée derrière une deuxième extrémité de tube, la lumière irradiée, avant et après la réflexion derrière une deuxième extrémité de tube, passant à travers un élément optique destiné à tourner le sens de polarisation, de sorte qu'elle présente un deuxième sens de polarisation après la deuxième traversée de l'élément optique,
- la lumière qui est renvoyée à travers le tube en raison de la réflexion présentant le deuxième sens de polarisation (9), lequel est orthogonal au premier sens de polarisation (3),
- filtrage de la lumière qui est renvoyée avec un filtre de polarisation (8) afin de ne laisser passer que la lumière qui est renvoyée avec le deuxième sens de polarisation (9),
- la lumière qui est renvoyée étant enregistrée avec un récepteur (10) destiné à enregistrer la lumière qui est renvoyée après son passage à travers le filtre de polarisation (8).

2. Procédé selon la revendication 1, le tube étant composé d'un matériau transparent ou opaque, de préférence de verre.

3. Procédé selon la revendication 1 ou 2, le tube possédant une longueur de 0,5 m à 3 m, de préférence de 1 m à 2,5 m, notamment de préférence de 1,4 m à 2 m, un diamètre intérieur de 2 mm à 100 mm de préférence entre 5 mm et 50 mm et le rapport entre la longueur du tube et le diamètre intérieur étant compris entre 10 et 1000, de préférence entre 20 et 500, notamment de préférence entre 30 et 300.

4. Procédé selon l'une des revendications précédentes 1 à 3, la lumière étant à bande étroite ou monochromatique et/ou possédant une longueur d'onde à laquelle l'extinction ou la réflexion du matériau du tube présente un maximum et/ou étant à polarisation linéaire ou circulaire et/ou étant injectée de manière stroboscopique et/ou étant collimatée.

5. Procédé selon l'une des revendications précédentes 1 à 4, un contrôle étant effectué à l'aide de la représentation pour vérifier si le contour intérieur se trouve dans une plage de tolérance.

6. Dispositif pour représenter le contour intérieur d'un tube conformément au procédé selon l'une des revendications précédentes 1 à 5, comprenant au moins :
- des moyens servant à fournir un tube,
- des moyens servant à irradier de la lumière ayant un premier sens de polarisation (3) sur une première extrémité du tube fourni dans le sens longitudinal du tube, la part de la lumière irradiée qui traverse la paroi du tube dans la direction longitudinale étant atténuée en raison de processus d'absorption et/ou de diffusion, et la part de la lumière irradiée qui est incidente sur la section transversale intérieure du tube traversant le tube dans la direction longitudinale sensiblement sans être atténuée,
- des moyens (6, 7) servant à réfléchir la lumière irradiée derrière une deuxième extrémité de tube, les moyens (6, 7) servant à réfléchir la lumière possédant à la fois des moyens (6) servant à tourner le sens de polarisation de la lumière ainsi que des moyens (7) servant à réfléchir la lumière en conservant son sens de polarisation, les moyens (6) servant à tourner le sens de polarisation étant disposés entre la deuxième extrémité du tube et les moyens (7) servant à réfléchir la lumière, de sorte que la lumière qui est renvoyée à travers le tube en raison de la réflexion présente un deuxième sens de polarisation (9), lequel est orthogonal au premier sens de polarisation (3),
- des moyens (8) servant à ne laisser passer que la lumière qui est renvoyée avec le deuxième sens de polarisation (9), et
- un récepteur (10) destiné à enregistrer la lumière qui est renvoyée et qui a pu passer à travers les moyens (8) servant à laisser passer.

7. Dispositif selon la revendication précédente 6, les moyens servant à irradier la lumière possédant une source de lumière (1) télécentrique.

8. Dispositif selon l'une des revendications précédentes 6 ou 7, les moyens servant à irradier la lumière ayant un premier sens de polarisation (3) possédant au moins une source lumineuse issue du groupe des ampoules à incandescence, des tubes à décharge gazeuse, des diodes électroluminescentes ou des lasers et comprenant de préférence un moyen servant à la modulation de l'intensité issu du groupe des obturateurs à secteur rotatifs, une commande électronique ou un circuit de déclenchement ainsi que, en option, un filtre de polarisation du premier sens de polarisation.

9. Dispositif selon l'une des revendications précédentes 6 à 8, les moyens servant à irradier la lumière ainsi que les moyens (8) servant à laisser passer la lumière qui est renvoyée possédant respectivement un filtre de polarisation, le filtre de polarisation des moyens servant à irradier étant orienté selon le premier sens de polarisation (3) et le filtre de polarisation des moyens (8) servant à laisser passer la lumière qui est renvoyée selon le deuxième sens de polarisation (9) et soit les deux filtres de polarisation sont réalisés sous la forme de filtres de polarisation linéaires, soit tous deux sous la forme de filtres de polarisation circulaires.

10. Dispositif selon l'une des revendications précédentes 6 à 9, comprenant un diviseur de faisceau (4) avant la première extrémité de tube, lequel et orienté de telle sorte qu'il dévie la lumière qui est renvoyée sur les moyens (8) servant à laisser passer la lumière qui est renvoyée.

11. Dispositif selon l'une des revendications précédentes 6 à 10, les moyens (6) servant à tourner le sens de polarisation de la lumière possédant une plaque Lambda/4.

12. Dispositif selon l'une des revendications précédentes 6 à 11, les moyens (7) de réflexion étant un rétroréflecteur ou un miroir.

13. Dispositif selon l'une des revendications précédentes 6 à 12, comprenant un filtre à bande étroite optique derrière les moyens (8) servant à laisser passer la lumière qui est renvoyée, dont la plage de passage est de préférence adaptée au spectre de la lumière qui est renvoyée.

14. Dispositif selon l'une des revendications précédentes 6 à 13, le récepteur (10) étant un récepteur télécentrique.

15. Dispositif selon l'une des revendications précédentes 6 à 14, comprenant une unité (11) destinée à interpréter si le contour intérieur représenté se trouve dans une plage de tolérance.
